# EUROPEAN PATENT SPECIFICATION

(11) **EP 3 536 442 B1**
(45) Date of publication and mention of the grant of the patent: **10.12.2025**
(21) Application number: 17867163.2
(22) Date of filing: 31.10.2017
(51) Int. Cl.: B23K 26/53, B23K 26/04, B23K 26/073, C04B 41/91, B23K 26/08, B23K 26/36, B23K 26/402, B23K 26/0622, A61C 13/00

(54) **PROCESSING METHOD, PROCESSING SYSTEM, AND PROCESSING PROGRAM**
VERARBEITUNGSVERFAHREN, VERARBEITUNGSSYSTEM UND VERARBEITUNGSPROGRAMM
PROCÉDÉ, SYSTÈME ET PROGRAMME DE TRAITEMENT

(30) Priority: 01.11.2016 JP 2016214176
(43) Date of publication of application: 11.09.2019
(73) Proprietor: Roland DG Corporation, Shizuoka 431-2103 (JP)
(72) Inventor: MAEDA, Toshio, Hamamatsu-shi Shizuoka 431-2103 (JP)
(74) Representative: Grünecker Patent- und Rechtsanwälte PartG mbB
(86) International application number: PCT/JP2017/039260
(87) International publication number: WO 2018/084130

(56) References cited:
- WO-A1-2016/033494
- DE-B3- 102008 019 694
- JP-A- 2001 096 995
- JP-A- 2009 513 362
- JP-A- 2016 513 016
- JP-A- S61 159 293
- US-A1- 2004 106 087
- US-A1- 2004 106 087
- US-A1- 2014 205 803
- US-A1- 2015 166 394
- US-A1- 2015 367 442
- US-A1- 2016 016 257

## Description

### Technical field

The present invention relates to machining methods, machining systems, and machining programs.

### Background art

Machining devices for milling materials, such as metals or plastics, to obtain a range of objects have been known. These machining devices have a plurality of drive shafts. For example, machining devices having five axes can fabricate objects with a complex shape by controlling the movement in the right-and-left (x-axis), forward-and-backward (y-axis), and up-and-down (z-axis) directions as well as the rotating movement around the x-axis (A-rotation axis) and the y-axis (B-rotation axis).

Dentistry prostheses are some examples of objects that can be fabricated using a machining device. Brittle ceramic materials such as zirconia or zirconia-containing ceramics are used as the material for such prosthesis. Fully sintered materials that are made of brittle ceramic materials are superior to those made of metal or plastic in terms of hardness, abrasion resistance, thermal resistance, corrosion resistance, among other properties.

On the contrary, since fully sintered materials made of brittle ceramic materials are very hard, their machining efficiency at the time of milling tends to be poor. Therefore, milling is typically performed on a block or a disk of a half sintered material. For example, a half sintered material is subjected to milling based on the machining data and then fired to obtain a fully sintered material. Then, after subjecting the fully sintered material to a finishing treatment such as polishing, a prosthesis is obtained (see Non-patent literature 1).

Technically, it is also possible to grind fully sintered materials made of brittle ceramic material (see Non-patent literature 2).

### [Related art documents]

### [Non-patent literatures]

[Non-patent literature 1] "Basic knowledge of zirconia and product report," [online], Yamakin, Co., Ltd., [retrieved on October 3, 2016], Internet <URL: http://www.yamakin-gold.co.jp/technical#support/webrequest/pdf/zirconia.pdf>
[Non-patent literature 2] "C-Pro Nano-Zirconia Type F," [online], Pharmaceuticals and Medical Devices Agency, [retrieved on October 3, 2016], Internet <URL: http://www.info.pmda.go.jp/downfiles/md/PDF/730056/730056#221AABZX00156000#A#01#05.pdf>

### [Patent literatures]

Further related background art is disclosed in US 2016/016257 A1, US 2015/166394 A1, US 2015/367442 A1, US 2004/106087 A1, US 2014/205803 A1, DE 10 2008 019694 B3 and WO 2016/033494 A1.

Conventional machining methods, however, present a problem, i.e., it takes a long time to complete the formation of each prosthesis.

For example, with the machining method of Non-patent literature 1, it takes approximately 7 to 15 hours to fire half-sintered materials after milling. In addition, machining by the machining method of Non-patent literature 1 requires the exchange of cutting tools depending on the shape of the prosthesis to be formed, so the machining times may be even longer.

When the machining method of Non-patent literature 2 is used, since the fully sintered materials exhibit high hardness as described above, it takes a long time to completely form the prostheses.

Furthermore, conventional machining methods present a problem, i.e., they pose difficulties in ensuring machining precision.

For example, when using the machining method of Non-patent literature 1, shrinkage or warping of the material can occur upon firing. Therefore, machining data that takes account the degree of shrinkage and warping is usually prepared. However, because the position and degree of contraction and warping differ depending on, for example, the shape of each prosthesis, the type of the material, or the machining temperature, it is difficult to prepare the machining data fully predicting contraction or warping. In other words, it is difficult to ensure sufficient machining precision for the prostheses. In addition, in the machining method of Non-patent literature 1, since the cutting and the firing processes are performed by separate devices, the material has to be positioned with respect to the device twice or more, resulting in a potential decrease of the machining precision.

Furthermore, in either Non-patent literature 1 or 2, machining requires keeping the tools for cutting or grinding directly in contact with the material. Therefore, the machining precision may be deteriorated owing to the force exerted on the material or tool as a result of the contact.

An object of the present invention is to provide machining methods, machining systems for implementing these machining methods, and machining programs executed in the machining systems with which the time required for machining can be shortened and objects can be obtained with high machining precision.

### Summary of the invention

An invention to achieve the aforementioned object is a machining method as defined in claim 1.

In addition, another invention to achieve the aforementioned object is a machining system as defined in claim 8.

Furthermore, yet another invention to achieve the aforementioned object is a machining program as defined in claim 9.

Other features of the present invention are disclosed in the description of the specification.

### Effect of the invention

The present invention makes it possible to shorten the time required for machining and obtain objects with high machining precision.

### Brief description of the drawings

Fig. 1 is a diagram schematically showing a configuration of a machining system according to an embodiment;
Fig. 2 is a flowchart showing an operation of the machining system according to the embodiment;
Fig. 3A is a diagram schematically showing a material of the embodiment;
Fig. 3B is a diagram schematically showing the material and an object of the embodiment;
Fig. 3C is a diagram schematically showing the material and the object of the embodiment;
Fig. 3D is a diagram schematically showing the material and the object of the embodiment;
Fig. 3E is a diagram schematically showing the material and the object of the embodiment;
Fig. 3F is a diagram schematically showing the material and the object of the embodiment;
Fig. 3G is a diagram schematically showing the material of the embodiment; and
Fig. 3H is a diagram schematically showing the material of the embodiment.

### Detailed description of the invention

In the descriptions of the specification and the drawings that follow, at least the following features are disclosed in addition to the aforementioned main invention.

That is, the machining method in which a machining data includes a group-of-points data representing a surface contour of the object and a cleavage data representing the cleavage site, in the first machining step, the laser is projected to positions corresponding to group-of-points data, and in the second machining step, the laser is projected to positions corresponding to cleavage data is disclosed. Laser machining using such machining data makes it possible to shorten the time required for machining and obtain objects with high machining precision.

Furthermore, the machining method in which the laser in the first machining step is projected from a position on a normal at each point included in the group-of-points data is disclosed. According to such machining method, it is possible to increase energy efficiency of the projected laser.

Furthermore, the machining method in which the laser(s) in at least one of the first machining step and the second machining step is projected from a position on a normal to the surface of the material is disclosed. According to such machining method, it is possible to reduce energy loss due to reflection of the laser from the surface of the material.

Furthermore, the machining method in which a spot diameter for the laser projected in the first machining step is smaller than a spot diameter for the laser projected in the second machining step is disclosed. Alternatively, the machining method in which a number of spots of the laser projected in the first machining step per unit area is larger than a number of spots of the laser applied in the second step per unit area is disclosed. These machining methods make it possible to obtain objects with higher machining precision.

Furthermore, the machining method in which the laser used in the first machining step is an ultrashort pulse laser is disclosed. By using the ultrashort pulse laser, a desired position or positions inside the material can be ablated.

Furthermore, the machining method in which the material is a fully sintered material of a zirconia-based light-transmitting material is disclosed. By using a zirconia-based light-transmitting material as the material, it is possible to project the laser to a desired position or positions inside the material. Moreover, the use of a fully sintered material eliminates the necessity of firing after machining, which results in reduction of the time required for machining and suppression of deterioration of machining precision.

Furthermore, the machining method further including a third machining step of separating the object from inside the material that has been subjected to the first machining step and the second machining step, by making the material divide at the cleavage site is disclosed. According to such machining method, it is possible to shorten the time required for machining.

Furthermore, the machining method further including a fourth machining step of polishing the separated object with the laser is disclosed. According to such machining method, it is possible to obtain objects with higher machining precision.

Furthermore, the machining method in which a spot diameter for the laser projected in the fourth machining step is smaller than a spot diameter for the laser projected in the first machining step is disclosed. According to such machining method, it is possible to obtain objects with higher machining precision.

### == Overview of embodiment ==

In a machining method according to this embodiment, materials are machined using a laser. Projecting a laser towards a material makes machining of these materials possible without any contact.

As for materials, those that transmit laser radiation (light-transmitting materials) are used. Specifically, zirconia-based light-transmitting materials are used. Zirconia-based light-transmitting materials may be composite materials such as zirconia-containing glass ceramics or zirconia alone with some transmittance. Materials need not have 100% light transmittance and any transmittance value will suffice as long as the laser reaches a certain location (a location where an object is to be formed).

Furthermore, the zirconia-based light-transmitting materials used in the machining method according to this embodiment are fully sintered materials. Since these materials do not require sintering after machining, the time required for machining is shortened. Moreover, the fully sintered materials are immune to contraction, which otherwise may be caused by firing, so machining precision is not deteriorated.

As for lasers, ultrashort laser pulses are used. Ultrashort laser pulses are a kind of pulses with durations of picoseconds to femtoseconds. Ablation (nonthermal machining) can be performed by exposing a certain position inside the material with ultrashort laser pulses for a short time. In ablation, the portion of material molten by the laser instantaneously evaporates and scatters, thus being eliminated, such that damage to the ablated portion due to heat is lower than with typical laser machining (thermal machining). Ablation is particularly effective for machining objects with a small size, such as dentistry prostheses.

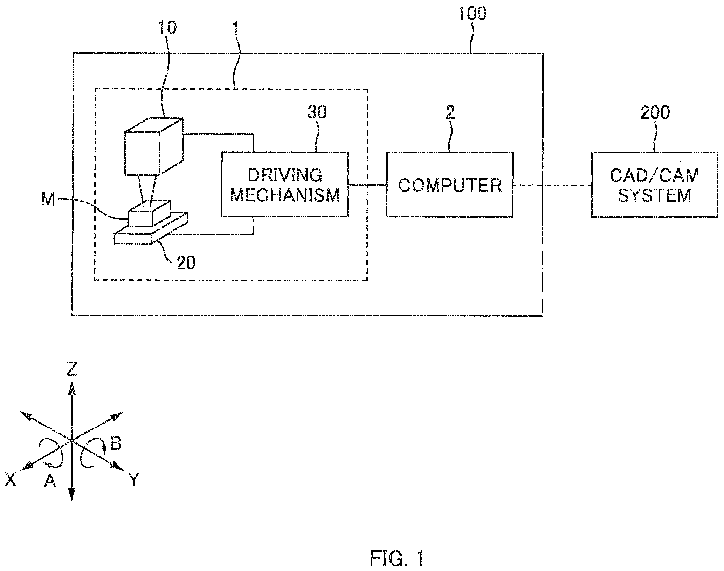

Projection of the laser towards materials is performed to positions corresponding to a machining data (described later) that has been prepared beforehand. The machining method according to this embodiment includes at least a step of forming an object inside the material by projection of the laser (first machining step) and a step of forming a cleavage site inside the material by projection of the laser towards outside a location in which the object has been formed (second machining step). In addition, the machining method according to this embodiment is performed by a machining system 100 as shown in Fig. 1. The machining system 100 machines materials by executing a machining program generated by a CAD/CAM system 200. Hereinafter, a "machining data," a "machining system," and a "machining using a machining system (machining method)" are described in detail.

### = Machining data =

The machining data is used by the machining system 100 for fabricating objects. The machining data is generated in the CAD/CAM system 200 according to each three-dimensional data of an object and each three-dimensional data of a material. For example, when fabricating dentistry prostheses, a machining data is generated using three-dimensional data obtained by scanning the inside of the oral cavity with a CCD camera or an X-ray CT. The three-dimensional data of each object is STL data or solid data used in three-dimensional CAD, or data such as 3 MF or AMF used in 3D printers.

The machining data according to this embodiment includes at least a group-of-points data and a cleavage data.

The group-of-points data represents a surface contour of an object. The group-of-points data consists of a plurality of point data along the surface contour of the object. Each point data has three-dimensional (x-, y-, and z-) coordinates and normal vector information. The coordinates are used in determining positions at which the laser is focused (i.e., the coordinates correspond to the positions to which the laser is projected inside the material). The normal vector information is used in determining the direction of the laser to be projected.

The point data are set at equal intervals along the surface contour of the object. Alternatively, the interval between the point data may be adjusted according to the shape of the object so that the energy distribution by laser projection becomes uniform.

The cleavage data represents a cleavage site inside the material. The cleavage data is set for three-dimensional data of a certain material representing the shape of the material. Each cleavage site serves to indicate where to cleave materials (described later). The cleavage site is located outside the location in which the surface contour of the object is formed inside the material. The cleavage site may be a planar area or a plurality of line segments. The cleavage site may be designated based on one or more patterns that have been prepared beforehand or any site on a three-dimensional data of the material may be designated at the time of generating the machining data.

In the present embodiment, the cleavage data is composed of a plurality of point data. Each point data has at least three-dimensional coordinates. The coordinates are used in determining the positions at which the laser is focused (i.e., the coordinates correspond to the positions to which the laser is projected inside the material). It should be noted that the cleavage data need not be a plurality of point data as long as it is a data capable of forming a cleavage site inside the material. For example, it may be a data for setting a range (position and width) over which the laser is projected towards the material.

The machining data may include data for use in finishing (polishing) or the like after the cleavage. In addition, the machining data may include information about laser output (spot diameter of the laser projected to each point, projection time, intensity, etc.).

The CAD/CAM system 200 supplies the generated machining data to the machining system 100. The machining system 100 is for machining materials by projecting the laser to the positions corresponding to the machining data. The format of the supplied data is not limited as long as the data can be used in the machining system 100.

### == Machining system ==

Fig. 1 is a diagram schematically showing the machining system 100. The machining system 100 includes a machining device 1 and a computer 2. The machining system 100, however, can be formed by a machining device 1 alone when the functions of the computer 2 are integrated into the machining device 1.

The machining device 1 according to this embodiment has five driving axes (the x-, y-, and z-axes as well as the A-rotation axis (the rotation axis around the x-axis) and B-rotation axis (the rotation axis around the y-axis). The machining device 1 machines materials by projecting the laser to the positions corresponding to the machining data. The machining device 1 includes a projection unit 10, a holding unit 20, and a driving mechanism 30.

The projection unit 10 is for projecting a laser towards materials. The projection unit 10 comprises a laser oscillator and an optical system including a group of lenses and the galvanometer mirror for directing the laser produced by the osciliator to each material.

The holding unit 20 is for holding a material M. Any method can be used for holding the material as long as the material being held can be moved and rotated along the five axes. For example, it is possible to use a method of clamping and holding a disk-shaped material with a clamp as in the case of milling using a conventional five-axis machining device or a method of bonding a metal pin to a block-like material and inserting the pin into the holding unit 20 to hold the material.

The driving mechanism 30 moves the projection unit 10 and the holding unit 20 relative to each other. The driving mechanism 30 has a driving motor and the like.

The computer 2 controls operations of the projection unit 10 and the driving mechanism 30. Specifically, the computer 2 controls the driving mechanism 30 to adjust the relative position between the projection unit 10 and the holding unit 20 (the material M) such that the laser can be projected to the positions corresponding to the machine data inside the material. Furthermore, the computer 2 controls the projection unit 10 to adjust the positions at which the laser is focused, the spot diameter of the projected laser, intensity and the like or projects the laser toward the material M for a certain period of time. The spot diameter, intensity, projection time and the like affects the output (energy) of the projected laser. These values may be integrated into the machining data beforehand as mentioned above, or may be set on the machining device 1 side. Furthermore, in determining these values, the type and properties of the material to be machined may be taken into consideration. The computer 2 is an example of the "control unit."

In the machining system 100 according to the present embodiment, it is also possible to perform cleavage and finishing processes as well as the formation of the object and the cleavage sites by adjusting the output of the laser produced from the projection unit 10. That is, since all processes for obtaining the object from the material M can be performed by the machining device 1, there is no potential decrease of the machining precision due to attachment and detachment of the material M.

### == Machining using machining system ==

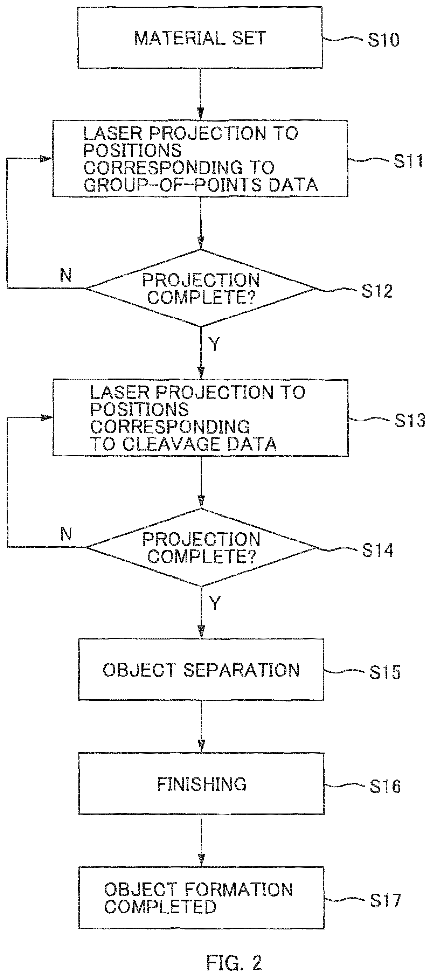

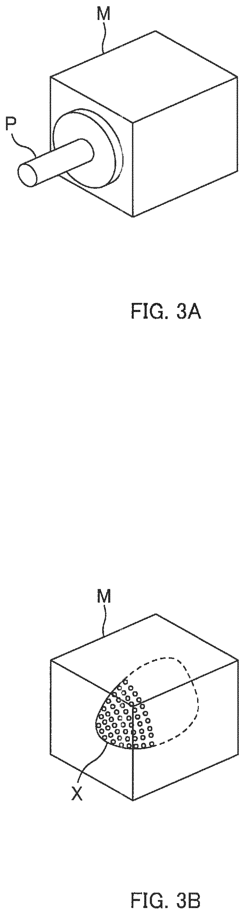

Next, referring to Figs. 2 to 3H, a specific example of the machining method according to the present embodiment is described. Here, an example in which the machining method is performed by the machining system 100 is described. In this example, the material M is to be machined to obtain the object X. Fig. 2 is a flowchart illustrating an operation of the machining system 100. Figs. 3A to 3H are diagrammatic representations of the object X or the material M being machined using the machining method according to this embodiment. It is assumed that a machining data of the object X is generated beforehand by the CAD/CAM system 200.

The material M to be used for machining the object X is selected and set to the holding unit 20 of the machining device 1 (material set; step 10). It is preferable that the material M to be selected has a shape corresponding to the one represented by the three-dimensional data of the material used in generating the machining data (cleavage data). However, the selected material M may have any shape as long as it encompasses at least the object X. As shown in Fig. 3A, the material M is a block-shaped member, and a metal pin P held by the holding unit 20 is bonded and fixed thereto. In Figs. 3B to 3G, the pin P is not illustrated.

The computer 2 makes the machining device 1 perform machining of the material M according to the machining data of the object X.

First, the computer 2 makes a laser be projected to one or more positions corresponding to the respective group-of-points data included in the machining data (laser projection to positions corresponding to the respective group-of-points data; step 11).

The computer 2 performs adjustment in such a manner that a position at which the laser is focused matches the coordinates of a certain point data included in the group-of-points data. Specifically, the computer 2 adjusts a relative position between the projection unit 10 and the driving mechanism 30 and adjusts orientations and angles of a group of lenses and the galvanometer mirror of the projection unit 10. The adjustment of the position at which the laser is focused is performed in consideration of a refractive index of the material M. After the position at which the laser is focused matches the coordinates of the point data, the computer 2 controls the projection unit 10 and makes it project the laser from a position on a normal based on the normal information included in the point data for a certain period of time. By projecting the laser from a position on a normal, it is possible to increase energy efficiency of the laser exerted on the machined portion.

The computer 2 successively projects a laser according to the point data included in the group-of-points data (see Fig. 3B). In Fig. 3B and similar figures, the points where the laser is projected are shown by circles. Furthermore, the portions where no laser have been projected (part of the object X and the perimeters of cleavage surfaces T1 and T2) are shown by broken lines. The material has, at the position where the laser has been projected (machined portion), a crater which size depends on the spot diameter of the laser. Projection of the laser may be achieved by alternating the positioning and emission as described above; or if the position of the focal point does not change, machining may be performed successively for adjacent positions corresponding to the point data while the laser is being projected in consideration of machining efficiency.

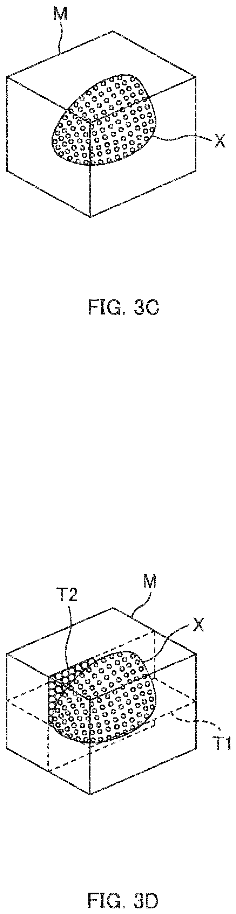

When the projections of the laser to the positions corresponding to all of the point data included in the group-of-points data have been completed (Y in step 12), the object X is formed inside the material M (see Fig. 3C). The process of forming the object X by the projection of the laser to the inside of the material M is an example of the "first machining step."

Next, the computer 2 makes the laser to be projected to one or more positions corresponding to the respective cleavage data included in the machining data (laser projection to positions corresponding to the respective cleavage data; step 13).

Specifically, as in the step 11, the computer 2 performs adjustment in such a manner that a position at which the laser is focused matches the coordinates of a certain point data included in the cleavage data. After the position at which the laser is focused has matched the coordinates of the point data, the computer controls the projection unit 10 to make the projection unit 10 project the laser for a certain period of time. The computer 2 successively projects the laser according to the point data included in the cleavage data (see Fig. 3D). It should be noted that the positions to which the laser is projected are located outside the location in which the object X has been formed inside the material M.

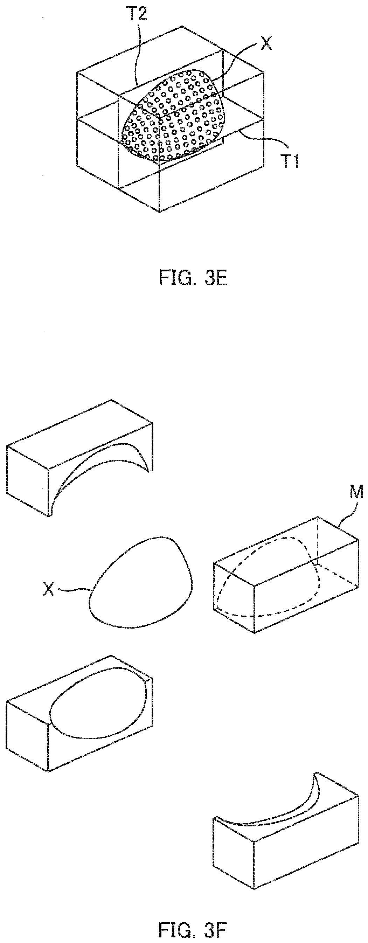

When the projections of the laser to the positions corresponding to all of the point data included in the cleavage data have been completed (Y in step 14), the cleavage site is formed inside the material M (see Fig. 3E). In this example, as the cleavage site, the cleavage surface T1 along the lateral direction of the material M and the cleavage surface T2 that is perpendicular to the cleavage surface T1 are formed (in Fig. 3E, the cleavage surfaces are indicated by solid lines and points are omitted). The process of forming the cleavage sites by projecting the laser to the inside of the material M as described above is an example of the "second machining step."

When such cleavage sites are formed (or during the time when a cleavage site is being formed), a crack can occur spontaneously from the cleavage site and cause the object X to separate from the material M. On the other hand, it is possible to intentionally promote the cleavage by exerting an external force to the material M.

In this case, the computer 2 separates the object X from inside the material M by cleaving, along the cleavage sites, the material M that has been subjected to the machining process of the steps 11 to 14 (separation of the material; step 15, see Fig. 3F). The process of separating the object X from inside the material M is an example of the "third machining step."

Regarding the method of separating objects (the method of promoting cleavages), various methods can be used depending on the type and physical properties of the material.

For example, it is possible to use a method of projecting a laser with a power equivalent to that used in ordinary thermal processing (higher power as compared to that in the steps including the step 11), thereby applying impact by heating to the material M to divide it. In this case, the projection unit 10 can be used as it is.

Alternatively, it is also possible to separate the object by providing the machining system 100 with a dedicated configuration for dividing operations.

For example, a structure for injecting gas refrigerant for cooling or dry ice is provided. It is possible to divide the material M by injecting a gas refrigerant or the like to rapidly cool it. Alternatively, ultrasonic vibrations may be applied to the material M by a horn that generates ultrasonic waves to divide the material M or a force may be directly exerted on the material M by a hammer or the like to divide the material M (a method using physical interference).

Whether or not the object X is completely separated from the material M may be measured and monitored using a CCD camera or an image processing device provided in the machining system 100. In the case where the object X has not been completely separated from the material M, the aforementioned method may be performed twice or more or may be combined to promote the cleavage.

When the group-of-points data is generated along the contour of the object X and the ablation is performed by projecting the laser according to that data, the contour of the object X obtained after the cleavage operations is almost identical to the original shape represented by the three-dimensional data from which the machining data has been derived. On the other hand, depending on the density of the groups of points, the state of laser projection, conditions of cleavage, or other factor, a part of the material M can be left on the surface of the object X, producing irregularities on the surface of the object X. Therefore, from the viewpoint of increasing precision of object machining, it is more preferable to perform finishing.

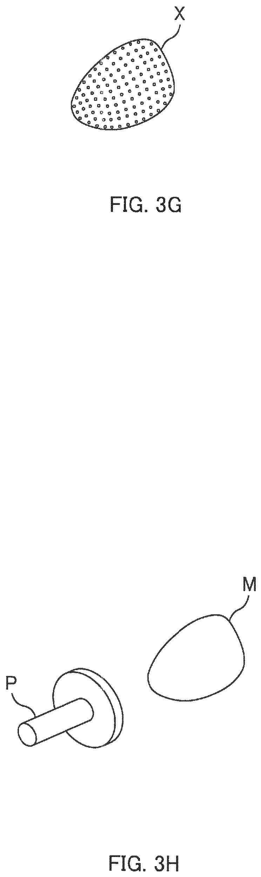

The computer 2 performs finishing by polishing the object X separated in the step 15 with a laser (finishing, step 16). The method of finishing (polishing method) is not particularly limited. For example, because the group-of-points data included in the machining data follows the contour of the object X, the laser is projected again according to the group-of-points data (see Fig. 3G). If a part of the material M is left on the surface of the object X obtained in the step 15, the remaining material M is removed by the projection of the laser in the step 16. Accordingly, the shape becomes closer to that of the object X. The step of polishing the separated object X with a laser is an example of the "fourth machining step."

Finally, heat is applied between the pin P and the object X to remove the pin P. In this way, the object X can be obtained. (complete formation of the object, step 17; see Fig. 3H).

Although laser polishing has been described as an example of finishing, mechanical polishing, as an example not according to the invention, like those used conventionally may be performed. Furthermore, by providing a dedicated configuration in the machining system 100, it is possible to perform dyeing or glazing as finishing.

As described above, according to the machining method of the present embodiment, an object can be removed easily from a material by forming the object and cleavage sites inside a fully sintered material by using a laser. Therefore, unlike conventional machining methods, it is not necessary to spend time on machining itself or post-processing such as firing. In other words, according to the machining method of this embodiment, time required for machining can be shortened. In addition, in the machining method according to the present embodiment, fully sintered material is subjected to machining, so that it is unnecessary to take contraction owing to firing into consideration. Moreover, since objects can be machined in a single machining device, no alignment and the like is required once the material used has been set. Furthermore, the use of a laser for machining eliminates any physical contact between the material and cutting tools or the like. Consequently, with the machining method of this embodiment, objects can be obtained with high machining precision.

### = Others =

When a laser is projected into materials, loss of energy by reflection from the surface of the material occurs. Against this issue, the computer 2 can also control the projection unit 10 so that the laser is projected from a position on a normal to the surface of the material.

Moreover, for example, in order to ensure separation of objects from materials, it is preferable that the laser machining is precisely performed along the boundary between a material and an object (a contour of the object). On the other hand, regarding a cleavage site, laser machining is not necessarily performed precisely because a simple cleavage operation will suffice.

Accordingly, lasers may be projected with different spot diameters from process to process. Specifically, the computer 2 can control the projection unit 10 in such a way that a spot diameter for the laser projected in the step of forming an object (the first machining step) is smaller than a spot diameter for the laser projected in the step of forming a cleavage site (the second machining step).

Alternatively, instead of changing spot diameters, the number of spots of the laser projected per unit area (spot density) can be changed to obtain similar effects.

That is, the computer 2 can control the projection unit 10 in such a way that the number of spots of the lasers projected in the first machining step per unit area is larger than the number of spots of the lasers applied in the second step per unit area.

Furthermore, the polishing in the finishing step (fourth machining step) needs to be performed more precisely in order to reproduce the three-dimensional shape of each object. Therefore, the controller 2 can also control projection unit 10 in such a way that a spot diameter for the laser projected in the fourth machining step is smaller than a spot diameter for the laser projected in the first machining step.

In the above embodiment, an example in which all machining processes are performed in the machining system 100 has been described. In the present invention, however, it is not intended to exclude a mode in which the process of forming objects and cleavage site(s) and the process of cleavage are performed with different devices. Even when the machining method according to the present invention is performed using two or more devices in a manner as mentioned just above, it is possible to shorten the time required for machining and increase machining precision at least as compared to those obtained using conventional machining methods.

Further, although an example in which a block-shaped material M is subjected to machining has been described in the above embodiment, the material M is not limited thereto. According to the machining method of the above embodiment, it is also possible to form asymmetric shapes such as bridge-shaped members and dentures that can machine two or more teeth from a single member.

It is also possible to supply a program to a computer using a non-transitory computer readable medium with the machining program in the above embodiment stored therein. Examples of the non-transitory computer readable medium include magnetic storage media (e.g. flexible disks, magnetic tapes, and hard disk drives), and CD-ROMs (read only memories).

The above embodiment is provided as an example of the invention, and does not limit the scope of the invention. Various omissions, substitutions, and changes can be made to the above configuration without departing from the subject matter of the invention as defined by the appended claims. The above embodiment and modifications thereof are included in the scope of the invention as defined by the appended claims.

### Denotation of symbols

- 1: machining device
- 2: computer
- 10: projection unit
- 20: holding unit
- 30: driving mechanism
- 100: machining system

## Claims

1. A machining method of machining a light-transmitting material (M) using an ultrashort pulse laser configured to ablate a desired position or positions inside the material (M), the method comprising:
a first machining step (S11) of forming an object (X) having a three dimensional shape inside the material (M) by projection of the laser;
a second machining step (S13) of forming a cleavage site (T1, T2) inside the material (M) by projection of the laser towards outside a location in which the object (X) has been formed;
wherein a machining data comprises a group-of-points data representing a surface contour of the object (X) and a cleavage data representing the cleavage site (T1, T2),
in the first machining step (S11), the laser is projected to focal points of the laser based on the group-of-points data, and
in the second machining step (S13), the laser is projected to positions corresponding to the cleavage data;
the machining method further comprising:
a third machining step (S15) of separating the object (X) from inside the material (M) that has been subjected to the first machining step (S11) and the second machining step (S13), by making the material (M) divide at the cleavage site (T1, T2); and
a fourth machining step (S16) of polishing the separated object (X) with the laser based on the group-of-points data.

2. The machining method according to Claim 1, wherein the laser in the first machining step (S11) is projected from a position on a normal at each point included in the group-of-points data.

3. The machining method according to Claim 1, wherein the laser(s) in at least one of the first machining step (S11) and the second machining step (S13) is projected from a position on a normal to the surface of the material (M).

4. The machining method according to any one of Claims 1 to 3, wherein a spot diameter for the laser projected in the first machining step (S11) is smaller than a spot diameter for the laser projected in the second machining step (S13).

5. The machining method according to any one of Claims 1 to 4, wherein a number of spots of the laser projected in the first machining step (S11) per unit area is larger than a number of spots of the laser applied in the second machining step (S13) per unit area.

6. The machining method according to any one of Claims 1 to 5, wherein the material (M) is a fully sintered material of a zirconia-based light-transmitting material.

7. The machining method according to any one of Claims 1 to 6, wherein a spot diameter for the laser projected in the fourth machining step (S16) is smaller than a spot diameter for the laser projected in the first machining step (S11).

8. A machining system (1) for machining a light-transmitting material (M) using an ultrashort pulse laser configured to ablate a desired position or positions inside the material (M), the system comprising:
a projection unit (10) that is configured to project the laser;
a holding unit (20) that is configured to hold the material (M);
a driving mechanism (30) that is configured to move the projection unit (10) and the holding unit (20) relative to each other; and
a control unit (2) that is configured to control the projection unit (10) and the driving mechanism (30) so as to perform a first machining step (S11) of forming an object (X) having a three dimensional shape inside the material (M) by projection of the laser and a second machining step (S13) of forming a cleavage site (T1, T2) inside the material (M) by projection of the laser towards outside a location in which the object (X) has been formed;
wherein a machining data comprises a group-of-points data representing a surface contour of the object (X) and a cleavage data representing the cleavage site (T1, T2),
in the first machining step (S11), the laser is projected to focal points of the laser based on the group-of-points data, and
in the second machining step (S13), the laser is projected to positions corresponding to the cleavage data;
the control unit (2) that is further configured to control the projection unit (10) and the driving mechanism (30) so as to perform:
a third machining step (S15) of separating the object (X) from inside the material (M) that has been subjected to the first machining step (S11) and the second machining step (S13), by making the material (M) divide at the cleavage site (T1. T2); and
a fourth machining step (S16) of polishing the separated object (X) with the laser based on the group-of-points data.

9. A program when executed in a machining system (1) for machining a light-transmitting material (M) using an ultrashort pulse laser configured to ablate a desired position or positions inside the material (M), the program causing the machining system (1) to perform:
a first machining step (S11) of projecting the laser to form an object (X) having a three dimensional shape inside the material (M),
a second machining step (S13) of projecting the laser towards outside a location in which the object (X) has been formed to form a cleavage site (T1, T2) inside the material (M),
wherein a machining data comprises a group-of-points data representing a surface contour of the object (X) and a cleavage data representing the cleavage site (T1, T2),
in the first machining step (S11), the laser is projected to focal points of the laser based on the group-of-points data, and
in the second machining step (S13), the laser is projected to positions corresponding to the cleavage data;
the program further causing the machining system (1) to perform:
a third machining step (S15) of separating the object (X) from inside the material (M) that has been subjected to the first machining step (S11) and the second machining step (S13), by making the material (M) divide at the cleavage site (T1, T2); and
a fourth machining step (S16) of polishing the separated object (X) with the laser based on the group-of-points data.

## Patentansprüche

1. Ein Bearbeitungsverfahren zur Bearbeitung eines lichtdurchlässigen Materials (M) unter Verwendung eines Ultrakurzpulslasers, der so konfiguriert ist, dass er eine gewünschte Position oder Positionen innerhalb des Materials (M) abträgt, wobei das Verfahren aufweist:
einen ersten Bearbeitungsschritt (S11) zur Bildung eines Objekts (X) mit einer dreidimensionalen Form im Inneren des Materials (M) durch Projektion des Lasers;
einen zweiten Bearbeitungsschritt (S13) zum Bilden einer Spaltstelle (T1, T2) innerhalb des Materials (M) durch Projektion des Lasers nach außerhalb einer Stelle, an der das Objekt (X) gebildet worden ist;
wobei eine Bearbeitungsinformation eine Punktgruppeninformation aufweist, die eine Oberflächenkontur des Objekts (X) darstellt, und eine Spaltinformation, die die Spaltstelle (T1, T2) darstellt,
in dem ersten Bearbeitungsschritt (S11) der Laser auf Brennpunkte des Lasers projiziert wird, basierend auf den Punktgruppendaten, und
in dem zweiten Bearbeitungsschritt (S13) der Laser auf Positionen projiziert wird, die den Spaltdaten entsprechen;
das Bearbeitungsverfahren weist weiter auf:
einen dritten Bearbeitungsschritt (S15) des Trennens des Objekts (X) aus dem Inneren des Materials (M), das dem ersten Bearbeitungsschritt (S11) und dem zweiten Bearbeitungsschritt (S13) unterzogen wurde, indem das Material (M) an der Spaltstelle (T1, T2) geteilt wird; und
einen vierten Bearbeitungsschritt (S16) des Polierens des getrennten Objekts (X) mit dem Laser auf der Grundlage der Punktgruppendaten.

2. Das Bearbeitungsverfahren nach Anspruch 1, wobei der Laser in dem ersten Bearbeitungsschritt (S11) von einer Position auf einer Normalen an jedem Punkt, der in den Punktgruppendaten vorhanden ist, projiziert wird.

3. Das Bearbeitungsverfahren nach Anspruch 1, wobei der/die Laser im ersten Bearbeitungsschritt (S11) und/oder im zweiten Bearbeitungsschritt (S13) von einer Position auf einer Normalen auf die Oberfläche des Materials (M) projiziert werden.

4. Das Bearbeitungsverfahren nach einem der Ansprüche 1 bis 3, wobei ein Punktdurchmesser für den im ersten Bearbeitungsschritt (S11) projizierten Laser kleiner ist als ein Punktdurchmesser für den im zweiten Bearbeitungsschritt (S13) projizierten Laser.

5. Das Bearbeitungsverfahren nach einem der Ansprüche 1 bis 4, wobei eine Anzahl von Punkten des im ersten Bearbeitungsschritt (S11) pro Flächeneinheit projizierten Lasers größer ist als eine Anzahl von Punkten des im zweiten Bearbeitungsschritt (S13) pro Flächeneinheit aufgebrachten Lasers.

6. Das Bearbeitungsverfahren nach einem der Ansprüche 1 bis 5, wobei das Material (M) ein vollständig gesintertes Material aus einem lichtdurchlässigen Werkstoff auf Zirkoniumdioxidbasis ist.

7. Das Bearbeitungsverfahren nach einem der Ansprüche 1 bis 6, wobei ein Spotdurchmesser für den im vierten Bearbeitungsschritt (S16) projizierten Laser kleiner ist als ein Spotdurchmesser für den im ersten Bearbeitungsschritt (S11) projizierten Laser.

8. Ein Bearbeitungssystem (1) zum Bearbeiten eines lichtdurchlässigen Materials (M) unter Verwendung eines Ultrakurzpulslasers, der so konfiguriert ist, dass er eine gewünschte Position oder Positionen innerhalb des Materials (M) abträgt, wobei das System aufweist:
eine Projektionseinheit (10), die zum Projizieren des Lasers konfiguriert ist;
eine Halteeinheit (20), die zum Halten des Materials (M) konfiguriert ist;
eine Antriebseinheit (30), die so konfiguriert ist, dass sie die Projektionseinheit (10) und die Halteeinheit (20) relativ zueinander bewegt; und
eine Steuereinheit (2), die so konfiguriert ist, dass sie die Projektionseinheit (10) und den Antriebsmechanismus (30) so steuert, dass sie einen ersten Bearbeitungsschritt (S11) des Ausbildens eines Objekts (X) mit einer dreidimensionalen Form innerhalb des Materials (M) durch Projektion des Lasers und einen zweiten Bearbeitungsschritt (S13) des Ausbildens einer Spaltstelle (T1, T2) innerhalb des Materials (M) durch Projektion des Lasers zur Außenseite eines Ortes, an dem das Objekt (X) ausgebildet wurde, durchführt;
wobei eine Bearbeitungsinformation eine Punktgruppeninformation aufweist, die eine Oberflächenkontur des Objekts (X) darstellt, und eine Spaltinformation, die die Spaltstelle (T1, T2) darstellt,
in dem ersten Bearbeitungsschritt (S11) der Laser auf Brennpunkte des Lasers projiziert wird, basierend auf den Punktgruppendaten, und
in dem zweiten Bearbeitungsschritt (S13) der Laser auf Positionen projiziert wird, die den Spaltdaten entsprechen;
die Steuereinheit (2), die weiter so konfiguriert ist, dass sie die Projektionseinheit (10) und den Antriebsmechanismus (30) so steuert, dass sie ausführt:
einen dritten Bearbeitungsschritt (S15) des Trennens des Objekts (X) aus dem Inneren des Materials (M), das dem ersten Bearbeitungsschritt (S11) und dem zweiten Bearbeitungsschritt (S13) unterzogen wurde, indem das Material (M) an der Spaltstelle (T1, T2) geteilt wird; und
einen vierten Bearbeitungsschritt (S16) des Polierens des trennbaren Objekts (X) mit dem Laser auf der Basis der Punktgruppendaten.

9. Ein Programm, wenn es in einem Bearbeitungssystem (1) zur Bearbeitung eines lichtdurchlässigen Materials (M) unter Verwendung eines Ultrakurzpulslasers ausgeführt wird, der so konfiguriert ist, dass er eine gewünschte Position oder Positionen innerhalb des Materials (M) abträgt, wobei das Programm das Bearbeitungssystem (1) veranlasst, Folgendes durchzuführen einen ersten Bearbeitungsschritt (S11) des Projizierens des Lasers, um ein Objekt (X) mit einer dreidimensionalen Form im Inneren des Materials (M) zu bilden,
einen zweiten Bearbeitungsschritt (S13) des Projizierens des Lasers zur Außenseite einer Stelle, an der das Objekt (X) geformt worden ist, um eine Spaltstelle (T1, T2) innerhalb des Materials (M) zu bilden,
wobei eine Bearbeitungsinformation eine Punktgruppeninformation aufweist, die eine Oberflächenkontur des Objekts (X) darstellt, und eine Spaltinformation, die die Spaltstelle (T1, T2) darstellt,
in dem ersten Bearbeitungsschritt (S11) der Laser auf Brennpunkte des Lasers projiziert wird, basierend auf den Punktgruppendaten, und
in dem zweiten Bearbeitungsschritt (S13) der Laser auf Positionen projiziert wird, die den Spaltdaten entsprechen;
wobei das Programm weiter das Bearbeitungssystem (1) veranlasst, auszuführen:
einen dritten Bearbeitungsschritt (S15) des Trennens des Objekts (X) aus dem Inneren des Materials (M), das dem ersten Bearbeitungsschritt (S11) und dem zweiten Bearbeitungsschritt (S13) unterzogen wurde, indem das Material (M) an der Spaltstelle (T1, T2) geteilt wird; und
einen vierten Bearbeitungsschritt (S16) des Polierens des trennbaren Objekts (X) mit dem Laser auf der Grundlage der Punktgruppendaten.

## Revendications

1. Procédé d'usinage pour usiner un matériau transparent (M) utilisant un laser à impulsions ultra-courtes configuré pour éliminer une position ou des positions souhaitées à l'intérieur du matériau (M), le procédé comprenant :
une première étape d'usinage (S11) consistant à former un objet (X) ayant une forme tridimensionnelle à l'intérieur du matériau (M) par projection du laser ;
une deuxième étape d'usinage (S13) consistant à former un site de clivage (T1, T2) à l'intérieur du matériau (M) par projection du laser vers l'extérieur d'un emplacement dans lequel l'objet (X) a été formé ;
dans lequel une donnée d'usinage comprend une donnée de groupe de points représentant un contour de surface de l'objet (X) et une donnée de clivage représentant le site de clivage (T1, T2),
lors de la première étape d'usinage (S11), le laser est projeté vers des points focaux du laser sur la base de la donnée de groupe de points, et
lors de la deuxième étape d'usinage (S13), le laser est projeté vers des positions correspondant à la donnée de clivage ;
le procédé d'usinage comprenant en outre :
une troisième étape d'usinage (S15) consistant à séparer l'objet (X) de l'intérieur du matériau (M) qui a été soumis à la première étape d'usinage (S11) et à la deuxième étape d'usinage (S13), en amenant le matériau (M) à se diviser au niveau du site de clivage (T1, T2) ; et
une quatrième étape d'usinage (S16) consistant à polir l'objet séparé (X) avec le laser sur la base de la donnée de groupe de points.

2. Procédé d'usinage selon la revendication 1, dans lequel le laser lors de la première étape d'usinage (S11) est projeté depuis une position sur une normale à chaque point compris dans la donnée de groupe de points.

3. Procédé d'usinage selon la revendication 1, dans lequel le(s) laser(s) lors d'au moins l'une de la première étape d'usinage (S11) et de la deuxième étape d'usinage (S13) est (sont) projeté(s) depuis une position sur une normale par rapport à la surface du matériau (M).

4. Procédé d'usinage selon l'une quelconque des revendications 1 à 3, dans lequel un diamètre de point pour le laser projeté lors de la première étape d'usinage (S11) est plus petit qu'un diamètre de point pour le laser projeté lors de la deuxième étape d'usinage (S13).

5. Procédé d'usinage selon l'une quelconque des revendications 1 à 4, dans lequel un nombre de points du laser projeté lors de la première étape d'usinage (S11) par unité de surface est plus grand qu'un nombre de points du laser appliqué lors de la deuxième étape d'usinage (S13) par unité de surface.

6. Procédé d'usinage selon l'une quelconque des revendications 1 à 5, dans lequel le matériau (M) est un matériau entièrement fritté constitué d'un matériau transparent à base de zircone.

7. Procédé d'usinage selon l'une quelconque des revendications 1 à 6, dans lequel un diamètre de point pour le laser projeté lors de la quatrième étape d'usinage (S16) est plus petit qu'un diamètre de point pour le laser projeté lors de la première étape d'usinage (S11).

8. Système d'usinage (1) pour usiner un matériau transparent (M) utilisant un laser à impulsions ultra-courtes configuré pour éliminer une position ou des positions souhaitées à l'intérieur du matériau (M), le système comprenant :
une unité de projection (10) qui est configurée pour projeter le laser ;
une unité de maintien (20) qui est configurée pour maintenir le matériau (M) ;
un mécanisme d'entraînement (30) qui est configuré pour déplacer l'unité de projection (10) et l'unité de maintien (20) l'une par rapport à l'autre ; et
une unité de commande (2) qui est configurée pour commander l'unité de projection (10) et le mécanisme d'entraînement (30) afin d'effectuer une première étape d'usinage (S11) consistant à former un objet (X) ayant une forme tridimensionnelle à l'intérieur du matériau (M) par projection du laser et une deuxième étape d'usinage (S13) consistant à former un site de clivage (T1, T2) à l'intérieur du matériau (M) par projection du laser vers l'extérieur d'un emplacement dans lequel l'objet (X) a été formé ;
dans lequel une donnée d'usinage comprend une donnée de groupe de points représentant un contour de surface de l'objet (X) et une donnée de clivage représentant le site de clivage (T1, T2),
lors de la première étape d'usinage (S11), le laser est projeté vers des points focaux du laser sur la base de la donnée de groupe de points, et
lors de la deuxième étape d'usinage (S13), le laser est projeté vers des positions correspondant à la donnée de clivage ;
l'unité de commande (2) étant en outre configurée pour commander l'unité de projection (10) et le mécanisme d'entraînement (30) afin d'effectuer :
une troisième étape d'usinage (S15) consistant à séparer l'objet (X) de l'intérieur du matériau (M) qui a été soumis à la première étape d'usinage (S11) et à la deuxième étape d'usinage (S13), en amenant le matériau (M) à se diviser au niveau du site de clivage (T1, T2) ; et
une quatrième étape d'usinage (S16) consistant à polir l'objet séparé (X) avec le laser sur la base de la donnée de groupe de points.

9. Programme, lorsqu'il est exécuté dans un système d'usinage (1) pour usiner un matériau transparent (M) utilisant un laser à impulsions ultra-courtes configuré pour éliminer une position ou des positions souhaitées à l'intérieur du matériau (M), le programme amenant le système d'usinage (1) à effectuer :
une première étape d'usinage (S11) consistant à projeter le laser pour former un objet (X) ayant une forme tridimensionnelle à l'intérieur du matériau (M),
une deuxième étape d'usinage (S13) consistant à projeter le laser vers l'extérieur d'un emplacement dans lequel l'objet (X) a été formé pour former un site de clivage (T1, T2) à l'intérieur du matériau (M),
dans lequel une donnée d'usinage comprend une donnée de groupe de points représentant un contour de surface de l'objet (X) et une donnée de clivage représentant le site de clivage (T1, T2),
lors de la première étape d'usinage (S11), le laser est projeté vers des points focaux du laser sur la base de la donnée de groupe de points, et
lors de la deuxième étape d'usinage (S13), le laser est projeté vers des positions correspondant à la donnée de clivage ;
le programme amenant en outre le système d'usinage (1) à effectuer :
une troisième étape d'usinage (S15) consistant à séparer l'objet (X) de l'intérieur du matériau (M) qui a été soumis à la première étape d'usinage (S11) et à la deuxième étape d'usinage (S13), en amenant le matériau (M) à se diviser au niveau du site de clivage (T1, T2) ; et
une quatrième étape d'usinage (S16) consistant à polir l'objet séparé (X) avec le laser sur la base de la donnée de groupe de points.
